# EUROPEAN PATENT SPECIFICATION

(11) **EP 4 418 565 B1**
(45) Date of publication and mention of the grant of the patent: **24.06.2026**
(21) Application number: 23157518.4
(22) Date of filing: 20.02.2023
(51) Int. Cl.: H04B 7/185

(54) **METHOD FOR USING A USER EQUIPMENT IN A MOBILE COMMUNICATION NETWORK COMPRISING A NON-TERRESTRIAL NETWORK IN VIEW OF PROVIDING RADIO COVERAGE TO THE USER EQUIPMENT, MOBILE COMMUNICATION NETWORK, SYSTEM OF ANTENNA ENTITIES, PROGRAM AND COMPUTER-READABLE MEDIUM**
VERFAHREN ZUR NUTZUNG EINES BENUTZERGERÄTS IN EINEM MOBILFUNKNETZ.
RÉSEAU D'UTILISATEUR, ENTITÉES D'ANTENNES, PROGRAMME ET SUPPORT LISIBLE PAR ORDINATEUR

(43) Date of publication of application: 21.08.2024
(73) Proprietor: Deutsche Telekom AG, 53113 Bonn (DE)
(72) Inventor: KLATT, Axel, 50999 Köln (DE)
(74) Representative: Schwöbel, Thilo K.

(56) References cited:
- WO-A1-2022/081153
- US-A1- 2022 338 230
- NINGYU CHEN ET AL: "Service Link Switching with PCI unchanged", vol. 3GPP RAN 2, no. Athens, GR; 20230227 - 20230303, 17 February 2023 (2023-02-17), XP052245906, Retrieved from the Internet <URL:https://www.3gpp.org/ftp/TSG_RAN/WG2_RL2/TSGR2_121/Docs/R2-2301269.zip> [retrieved on 20230217]
- XIANGDONG ZHANG ET AL: "Discussion on PCI unchanged scenario", vol. RAN WG2, no. Athens, GR; 20230227 - 20230303, 17 February 2023 (2023-02-17), XP052244859, Retrieved from the Internet <URL:https://www.3gpp.org/ftp/TSG_RAN/WG2_RL2/TSGR2_121/Docs/R2-2300209.zip> [retrieved on 20230217]

## Description

### BACKGROUND

The present invention relates a method for using a user equipment in a mobile communication network comprising a non-terrestrial network in view of serving or providing radio coverage to the user equipment, wherein the user equipment is served by a base station entity being part of that non-terrestrial network, wherein a first antenna entity or functionality and at least a second antenna entity or functionality are likewise part of that non-terrestrial network, as part of, or associated to, at least the base station entity, wherein both the first and second antenna entities or functionalities are either satellite-based antenna entities or functionalities, or antenna entities or functionalities based on a high-altitude platform.

Furthermore, the present invention relates to a system or mobile communication network for using a user equipment in a mobile communication network comprising a non-terrestrial network in view of serving or providing radio coverage to the user equipment, wherein the user equipment, being especially part of the system and/or connected to the mobile communication network, is served by at least one base station entity being part of that non-terrestrial network, wherein a first antenna entity or functionality and at least a second antenna entity or functionality are likewise part of that non-terrestrial network, as part of, or associated to, at least the base station entity,
wherein both the first and second antenna entities or functionalities are either satellite-based antenna entities or functionalities, or antenna entities or functionalities based on a high-altitude platform.

Additionally, the present invention relates to a user equipment, especially as part of a system or connected to an inventive mobile communication network, for being used in a mobile communication network comprising a non-terrestrial network in view of serving or providing radio coverage to the user equipment, wherein the user equipment is served by at least one base station entity being part of that non-terrestrial network, wherein a first antenna entity or functionality and at least a second antenna entity or functionality are likewise part of that non-terrestrial network, as part of, or associated to, at least the base station entity, wherein both the first and second antenna entities or functionalities are either satellite-based antenna entities or functionalities, or antenna entities or functionalities based on a high-altitude platform

Additionally, the present invention relates to an antenna entity or functionality as part of or associated with a base station entity and configured to interact with at least a second antenna entity or functionality, in order to use a user equipment in a mobile communication network comprising a non-terrestrial network comprising the first and second antenna entities or functionalities in view of serving or providing radio coverage to the user equipment, wherein the user equipment is served by the base station entity being part of that non-terrestrial network, wherein both the first and second antenna entities or functionalities are either satellite-based antenna entities or functionalities, or antenna entities or functionalities based on a high-altitude platform.

Furthermore, the present invention relates to a program and to a computer-readable medium for using a user equipment in a mobile communication network comprising a non-terrestrial network in view of serving or providing radio coverage to the user equipment according to the inventive method.

Mobile communication networks such as public land mobile networks are typically realized as cellular mobile communication networks, i.e. comprising (or using or being associated or assigned to a radio access network comprising) radio cells. Such cellular systems are known conforming to different mobile communication standards or radio access technologies, like 2G/3G/4G/5G/6G radio access technologies (referring to the different generations of radio access technologies) and typically comprise (or consist of) cells (or radio cells) of one or a plurality of the respective radio access technology/radio access technologies. Such mobile communication networks that are purely or predominantly based on terrestrial infrastructures of the radio access network are typically organized throughout a country (or a part of or a region within a country) in a repeating pattern of typically stationary (radio) cells (and associated base station entities) which typically belong to (or are used by or associated or assigned to) a mobile network operator (MNO).
Modern mobile communication networks, such as 5G systems, especially using 5G NR (new radio) radio (access) technology, are evolving using air-based and/or space-based infrastructure, hence relying, at least partly, on non-terrestrial infrastructure, especially in the form of satellites and/or high altitude platforms, HAPs, thereby realizing non-terrestrial networks, NTN (or satellite communication networks). Examples of such air-based and/or space-based network infrastructure include, e.g., mobile satellite connectivity with low earth orbit (LEO) satellites, medium earth orbit (MEO) satellites and/or geostationary earth orbit (GEO) satellites and also so-called high-altitude platforms or high-altitude pseudo-satellites (HAPS).
Such non-terrestrial networks are able to provide global cellular connectivity to handheld devices or user equipments, typically using satellite or HAP coverage with quasi-earth fixed beams, i.e. radio coverage is attempted to be provided, for a certain considered (quasi) fixed geographical area (of a considered radio cell), in an almost statical or almost unchanged manner - this, however, being possible, due to the movement of such satellites relative to the earth surface, only during certain time intervals of, at most, the order of a couple of minutes.
Such quasi-earth-fixed radio cells are in contrast to using earth-moving beams providing radio coverage in a moving geographical area (earth-moving radio cell), that is moving, relative to the earth surface, essentially together with the movement of the satellite (or the high-altitude platform device).

In terrestrial mobile communication networks, the typical approach for providing radio coverage to a certain geographic area and/or to a certain number of user equipments is by means of using base station entities that are typically stationary and wherein each base station entity serves a radio cell (or a plurality of radio cells) that is (are) likewise typically rather stationary, i.e. a considered radio cell is typically roughly centered (or otherwise rather stationarily positioned) relative to an antenna entity of or associated with the considered base station entity that serves the considered radio cell or geographical area thereof. Of course, in case that a plurality of such base station entities are required - e.g. in view of a larger geographic area to be covered and/or in view of a higher (peak) demand for mobile communication services to be provided - a plurality of such mostly stationary base station entities are used, again, each one serving a radio cell (or a plurality of radio cells) that is (are) likewise typically rather stationary, i.e. each radio cell (or, the corresponding geographical area) is likewise rather stationary, and regarding a mobile user or user equipment that is geographically moving sufficiently to leave one (rather stationary) radio cell and to enter another (rather stationary) radio cell there will be the need to perform a handover procedure, at least in case a user equipment is considered that is currently in a certain mode, such as connected mode.
Hence, handover procedures are required to be performed in case of any such movements of such mobile users or user equipments relative to the (rather stationary) radio cells provided by the (rather stationary) base station entities of typical terrestrial mobile communication networks.

Regarding mobility procedures in or related to non-terrestrial networks, technologies known from terrestrial networks (TN) have been largely used by 3GPP to define the non-terrestrial network-related procedures.
However, the difference remains in that satellite-based base stations, or parts thereof - especially the antenna parts thereof that are actually providing radio coverage and are also defining radio coverage boundaries between radio cells - are necessarily constantly moving relative to a user equipment that is stationary, or almost stationary, at or near the earth's surface and which user equipment is to be served or provided with such radio coverage (of course, however, unless geo-stationary satellites would be used that are necessarily associated with other drawbacks including, especially, latency).
This means that (generally speaking and in contrast to the typical situation in terrestrial networks) for non-terrestrial networks, it is the radio cells that somehow move (or, necessarily need to move more or less together with the relative movement of the satellites) relative to mobile users or user equipments - at least when considering longer time intervals, such as, e.g. (at least) exceeding dozens of minutes during which radio coverage even provided by quasi-earth fixed beams cannot be held (geo-)stationary -, and this necessarily results, again, in handover procedures being required due to such relative movement between, on the one hand, radio cells provided by the satellite-based base station entities, and, (rather stationary) mobile users or user equipments, on the other hand.

However, performing handover procedures is costly (not only in terms of energy used, e.g. for performing, especially radiofrequency, measurements, or for transmitting and/or receiving additional radiofrequency signals, or for performing processing, but also in terms of additional overhead communications required, and, hence, associated usage of limited air interface capacity), not only for the user equipment involved as well as for the base station entity involved, but also - more generally and also as a consequence thereof - for the considered mobile communication network.
Relevant technical disclosures can be found in documents WO 2022/081153 A1, US 2022/0338230 A1, NINGYU CHEN ET AL: "Service Link Switching with PCI unchanged", 3GPP DRAFT; R2-2301269; Athens, GR; 20230227 - 20230303 17 February 2023, and XIANGDONG ZHANG ET AL: "Discussion on PCI unchanged scenario", 3GPP DRAFT; R2-2300209; Athens, GR; 20230227 - 20230303 17 February 2023.

### SUMMARY

The object of the present invention is achieved by a method according to claim 1.

It is thereby advantageously possible to provide an optimized mobility management in a non-terrestrial network environment, and, especially, to be able to reduce the number, or the rate, of handover procedures that would otherwise be (or have been) necessary due to the relative movement of the first and second antenna entities or functionalities (onboard the satellite or satellites or onboard the high altitude platform(s)) relative to the considered mobile user or user equipment (being located - rather stationary with regard to the earth's surface - within a quasi-earth-fixed radio cell generated by respective radio beams provided or generated by the first and/or second antenna entities or functionalities). Reducing the number, or the rate of handover procedures (that would otherwise have been required), of course, also advantageously reduces the risk that a connection is lost (due to the handover not being successful); furthermore, all procedures related to performing a handover that is able to be avoided can also be avoided, e.g. related neighbor cell planning and configuration as part of planning and operational tasks.
It is advantageously possible to overcome all these planning, configuration and execution aspects (regarding avoided handover procedures) and simplify the mobility procedures within a non-terrestrial network to a minimum. Of course, one solution would be the usage of geo-stationary satellites as these provide a static coverage area on the earth; however, geo-stationary satellites have several drawbacks compared to low-earth orbit satellites (especially regarding pathloss, delay, capacity, etc.).

A user equipment is considered that is served (or provided with radio coverage) by a base station entity of a mobile communication network comprising a non-terrestrial (access) network. The non-terrestrial (access) network comprises a first antenna entity or functionality and at least a second antenna entity or functionality, and the first and second antenna entities or functionalities are either satellite-based antenna entities or functionalities, or antenna entities or functionalities based on a high-altitude platform.
Hence, the first and second antenna entities or functionalities are part of the considered non-terrestrial network which comprises, at least, the first base station entity (but preferably also at least a second base station entity and/or further base station entities).
The first and/or second antenna entities or functionalities might as well be part of satellites or of high-altitude platforms; hence, in cases where it is mentioned that one or both of the antenna entities or functionalities are said to be part of, or onboard, a satellite, or of different satellites, it is also meant that such antenna entities or functionalities are part of, or onboard, a high-altitude platform, or of different high-altitude platforms.

Furthermore, the first and second antenna entities or functionalities are part of the non-terrestrial network as part of, or associated to, at least the base station entity. Different possibilities are conceivable regarding whether the first and/or second antenna entity or functionality is either part of, or associated to at least the base station entity: According to one scenario, the first and second antenna entities or functionalities might (both) be part of the first base station entity (in which case, typically, the first base station entity is a satellite-based base station entity and both the first and second antenna entities or functionalities are part of the same satellite). Furthermore, it is conceivable that the first and second antenna entities or functionalities are (both) only associated to the first base station entity (in which case, typically, the first base station entity, or at least part thereof, is not, itself, satellite-based but nevertheless the first and second antenna entities or functionalities are part of the same satellite). Still furthermore, it is conceivable that the first antenna entity or functionality is part of the first base station entity, and the second antenna entity or functionality is part of another base station entity, e.g. part of the second base station entity (in which case, typically, the first base station entity is a satellite-based base station entity and - with the first antenna entity or functionality - part of a first satellite, and the other (or second) base station entity is likewise a satellite-based base station entity and - with the second antenna entity or functionality - part of a further (or second) satellite). Still furthermore, it is conceivable that the first antenna entity or functionality is only associated to the first base station entity and the second antenna entity or functionality likewise only associated to the other (or second) base station entity (in which case, typically, both the first base station entity and the other (or second) base station entity, or at least part thereof, is/are not, itself/themselves, satellite-based, and the first antenna entity or functionality is part of a first satellite, and the second antenna entity or functionality is part of a further (or second) satellite).

It is furthermore assumed, that the first and second antenna entities or functionalities (either as part of one single satellite, i.e. as different antenna elements or modules of that same satellite, or as part of two different satellites) move relative to the earth surface. Thereby, the first and second antenna entities or functionalities are able to provide - together (i.e. sequentially) and during a common coverage time interval - radio coverage to a specific considered geographical area that corresponds to a quasi-earth-fixed radio cell. This is possible by means of the first antenna entity or functionality covering a first part (e.g. roughly the first half) of the common coverage time interval regarding the quasi-earth-fixed radio cell, and the second antenna entity or functionality covering a subsequent second part (e.g. roughly the second half) of the common coverage time interval regarding the quasi-earth-fixed radio cell. In case that the first and second antenna entities or functionalities are located onboard or as part of different satellites, this might, e.g. and among other possibilities, be realized by means of these two satellites moving sequentially roughly above (or over) the quasi-earth-fixed radio cell, e.g. the second satellite (with the second antenna entity or functionality) essentially following the first satellite (with the first antenna entity or functionality). In case that the first and second antenna entities or functionalities are located onboard or as part of the same satellite, this might, e.g. and among other possibilities, be realized by means of the second antenna entity or functionality being positioned, relative to the direction of movement of the satellite, behind (or facing rather rearwards compared to) the first antenna entity or functionality such that the quasi-earth-fixed radio cell is able to be covered - while the satellite being above the quasi-earth-fixed radio cell - initially by the first antenna entity or functionality and then by the second antenna entity or functionality.

Both the first antenna entity or functionality and the second antenna entity or functionality transmit, respectively, a radio cell identifier information, wherein this radio cell identifier information might be, and will often be, different, however, during substantially the first part of the common coverage time interval, the first antenna entity or functionality transmits the same specific radio cell identifier information as the second antenna entity or functionality transmits during substantially the second part of the common coverage time interval.
Thus, the user equipment (while being located within the quasi-earth-fixed radio cell) is able to be provided with radio coverage (sequentially from the first and the second antenna entity or functionality): during substantially the first part of the common coverage time interval, the user equipment receives a specific radio cell identifier information transmitted by the first antenna entity or functionality, and during substantially the second part of the common coverage time interval, the user equipment receives the same specific radio cell identifier information (i.e. the same information content as radio cell identifier information) transmitted by the second antenna entity or functionality.

This advantageously results in a reduction of the number, or of the rate, of handover procedures that would otherwise be (or have been) necessary (due to the relative movement of the first and second antenna entities or functionalities relative to the quasi-earth-fixed radio cell). It is especially advantageous to use antenna entities or functionalities having the possibility to generate shapeable and/or steerable (radiofrequency communication) beams.
Hence, a static satellite network situation is created (despite using non-geo-stationary satellites, i.e. while low earth orbit satellites with multiple spot beams are still flying in and out - with respect to a user equipment on the earth surface).
It is proposed to not change the beams and hence the allocated PCI (or the radio cell identifier information transmitted) of the beam once the beam drifts away, but - during the beam switch - to allocate the same PCI (or radio cell identifier information) to the next spot beam (taking over the coverage provision) to avoid any change of cell (experienced by the user equipment(s)) and hence to avoid the handover procedure at all. With steerable beams, the original beam providing the coverage of a cell can be provided until the next steerable beam is able to take over the coverage provision on the same geographical area as the original beam. The main concept is that the new beam covers, at least more or less, the same geographical area as the original beam and the PCI (or radio cell identifier information) does not change; for a user equipment on the ground, the change of beams is, hence, not visible and the user equipment "assumes" that it is still served by the same beam (and/or the same satellite) and correspondingly the same cell as originally before the beam switch. It is especially preferred that each one of the first and second antenna entities or functionalities comprises one single (switchable, or steerable) beam ( this term is used synonymously to the term radio coverage beam), or that each one of the first and second antenna entities or functionalities comprises a plurality of (switchable, or steerable) beams, wherein regarding such a plurality of beams, the individual beams are either switchable or steerable individually (or separately) or together (or jointly).

As already said, regarding mobility procedures in or related to non-terrestrial networks, technologies known from terrestrial networks (TN) have been largely used by 3GPP to define the non-terrestrial network-related procedures.
Hence, in conventionally known mobile communication networks using non-terrestrial network technology, one main aspect is the configuration of individual (satellite) beams with a single dedicated cell identity as physical cell identity, PCI. One enhancement considered in conventionally known mobile communication networks is the possibility of configuring multiple spot beams with the same PCI in order to provide larger coverage areas on earth as if they belonged to the same radio cell. However, this only enlarges the coverage area considered, but it does not avoid a comparatively frequent cell change of a stationary user equipment.
When the movement of the sat and hence the spotbeam is considered, the implication of having a PCI per spot beam is becoming relevant: Once a satellite drifts away, even a steerable spot beam cannot keep the provision of the cell coverage statically on the earth, and, hence, the next beam - or, once the satellite drifted further away, the next satellite - will create a new cell on the geographical area earlier covered by the previous beam/satellite. This new cell also has a different PCI based on the procedures in conventionally known mobile communication networks. This subsequently requires the execution of a handover procedure of a user equipment, which is stationary on the ground. In other words, the classical inter-cell handover as known from the TN cellular network (with changing PCI between different cells) is applied. The design principle in 3GPP was that - even though now the network is moving and not the user equipment - all principles of a classical (TN) cellular network are reused in the NTN system. Hence, in conventionally known mobile communication networks using NTN access networks, radio cells move (at least in case geo-stationary satellites are excluded) relative to the earth surface, leading to changes of user equipment's serving cells in the order of several seconds (especially for earth moving radio cells) to several minutes (for quasi-earth-fixed radio cells).

It is advantageously possible to avoid such comparatively short service time spans, and the associated need to comparatively frequently conduct handover procedures, at least for all served user equipments in connected mode.
The invention is based on the idea that a second beam (or: the second antenna entity or functionality) takes over to serve a user equipment (being located in a certain geographic radio coverage area of a considered radio cell) with the same specific radio cell identifier information - especially the same physical cell identifier, PCI (value) - takes over the coverage of the (same) considered area of a first beam; hence for the user equipment it looks as if nothing had changed. The user equipment might even not notice the beam change at all, i.e. the change from being served by the first antenna entity or functionality (during substantially the first part of the common coverage time interval) to being served by the second antenna entity or functionality (during substantially the second part of the common coverage time interval). This is because on the Uu interface between the user equipment and the base station entity (or gNB, on the satellite, or on the earth, in case of transparent load architecture) nothing changes at all configuration-wise. So, there is no need for an intra-cell handover procedure.

The present application is focused on low earth orbit (LEO) satellites or high altitude platform entities which typically are located up to 300 km until 1500 km above ground (especially 400 km to 1000 km), and are, typically, traveling at a velocity of around 7 km/s, resulting in a round trip time about the globe of typically about 100 minutes.

Furthermore, the present invention relates to a mobile communication network according to claim 2.

Furthermore, the present invention relates to a system according to claim 3.

Additionally, the present invention relates to a program comprising a computer readable program code according to claim 4.

Still additionally, the present invention relates to a computer-readable medium according to claim 5.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

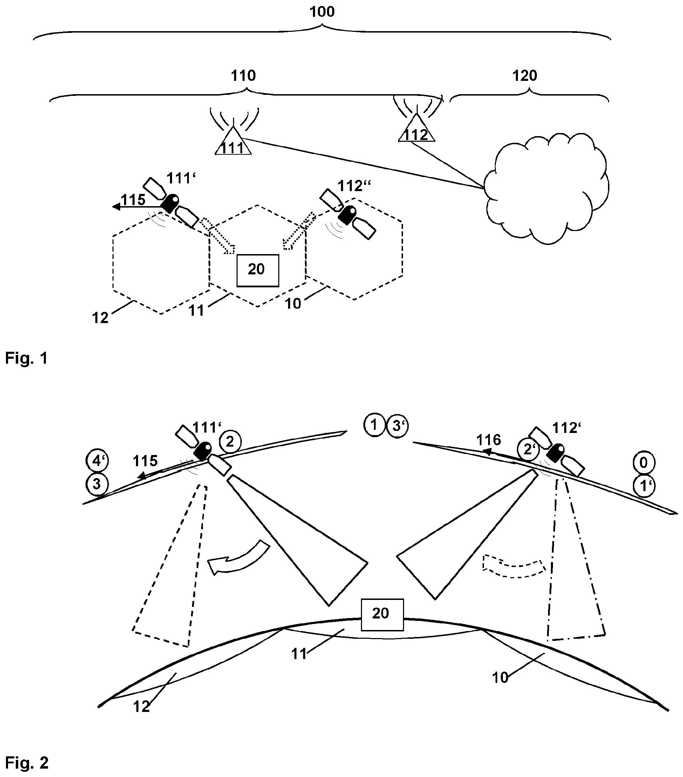

Figure 1 schematically illustrates the situation of a user equipment in a mobile communication network comprising a non-terrestrial network as its radio access network or, at least, as a part of its radio access network, wherein the user equipment is served by a base station entity (or by a plurality of base station entities), wherein a first antenna entity or functionality and at least a second antenna entity or functionality are likewise part of that non-terrestrial network, as part of, or associated to, the base station entity, or as part of, or associated to the plurality of base station entities, wherein both the first and second antenna entities or functionalities are either satellite-based antenna entities or functionalities, or antenna entities or functionalities based on a high-altitude platform.
Figure 2 schematically illustrates the situation of the user equipment being served by the base station entity (or by the plurality of base station entities), wherein radio coverage is provided (sequentially) by the first and second antenna entities or functionalities, wherein the first and second antenna entities or functionalities are located on different satellites or high-altitude platforms.

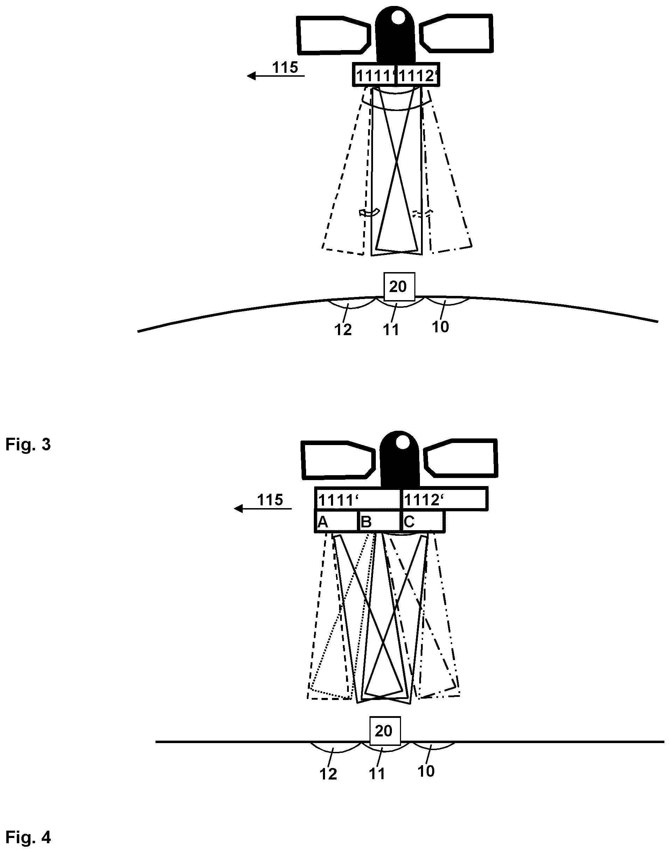

Figures 3 and 4 schematically illustrate the situation of the user equipment being served by the base station entity, wherein radio coverage is provided (sequentially) by the first and second antenna entities or functionalities, wherein both the first and second antenna entities or functionalities are located on the same satellite or high-altitude platform.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a user equipment 20 is schematically shown in a mobile communication network 100. In the example, the mobile communication network 100 comprises an access network 110 and a core network 120. The mobile communication network 100 is preferably a cellular telecommunications network comprising typically a plurality of network cells (or radio cells). According to the present invention, the mobile communication network 100 comprises or uses or is associated or assigned to a radio access network 110, and the radio access network 110 (of the mobile communication network 100) comprises at least one base station entity, but typically a plurality of base station entities. Figure 1 schematically and exemplarily shows a first base station entity 111 and a second base station entity 112.

The mobile communication network 100 (or telecommunications network 100) - or its (radio) access network 110 - is or at least comprises a non-terrestrial network in view of serving or providing radio coverage to the user equipment 20. E.g., the user equipment 20 is served by the (first) base station entity 111 being part of that non-terrestrial network.
A first antenna entity or functionality 111' and at least a second antenna entity or functionality 112' are also part of the non-terrestrial network or of the (radio) access network 110. The first and second antenna entities or functionalities 111', 112' are either satellite-based antenna entities or functionalities, or antenna entities or functionalities based on a high-altitude platform.
The figures primarily show the alternative of satellite-based antenna entities or functionalities 1111', 111', 1112', 112'; however, in the context of the present invention, in case it is mentioned that the first antenna entity or functionality 1111', 111' and/or the second antenna entity or functionality 1112', 112' is located aboard of, or part of, a satellite or a plurality of satellites, it is to be understood - if not explicitly or implicitly stated otherwise - that the first antenna entity or functionality 1111', 111' and/or the second antenna entity or functionality 1112', 112' might alternatively also be located aboard of, or part of, a high-altitude platform or a plurality of high-altitude platforms.
According to the representation in Figure 1, exemplarily, the first and second antenna entities or functionalities 111', 112' are part of different satellites or of different high-altitude platforms. The first and second antenna entities or functionalities 111', 112', as represented in Figure 1, might be, respectively, part of the (first) base station entity 111 and of the second base station entity 112 (in which case the first and second base station entities 111, 112 are part of the different satellites or high-altitude platforms; alternatively, the first and second antenna entities or functionalities 111', 112' might be (only) associated to the (first) base station entity 111 and/or to the second base station entity 112. In any case, by means of using the first and second antenna entities or functionalities 111', 112', the (first) base station entity 111 (and/or the second base station entity 112) serves or provides radio coverage to the user equipment 20.
The first antenna entity or functionality 111' is moving relative to the earth surface along a direction of movement which is schematically indicated by reference sign 115 in Figure 1. Likewise, the second antenna entity or functionality 112' is moving relative to the earth surface along a direction of movement (not specifically indicated in Figure 1); the direction of movement (or the path of movement) of the second antenna entity or functionality 112' might be almost parallel or identical or laterally translated with respect to the direction of movement (or the path of movement) 115 of the first antenna entity or functionality 111'; alternatively, the directions of movement (or paths of movement) of both antenna entities or functionalities 111', 112' could be provided intersecting (or crossing each other). However (or whatever) their direction of movement (or path of movement), Figure 1 represents a situation where, the first and second antenna entities or functionalities 111', 112' are able to provide (with or using the (first) base station entity 111 and/or the second base station entity 112) radio coverage to a specific considered geographical area that corresponds to a quasi-earth-fixed radio cell. This quasi-earth-fixed radio cell is indicated or designated, in Figure 1, by means of reference sign 11. It corresponds to a geographical area (indicated, exemplarily, as a hexagon, but it could also be indicated by means of a circle) where, at a specific point in time, radio coverage is able to be provided via (or using) the first antenna entity or functionality 111', and, at a specific further (and subsequent) point in time, radio coverage is able to be provided via (or using) the second antenna entity or functionality 112'.
In addition to the quasi-earth-fixed radio cell 11, Figure 1 also shows a first further quasi-earth-fixed radio cell 10 and a second further quasi-earth-fixed radio cell 12, these radio cells 10, 11, 12 being roughly located one behind the other and substantially aligned or along a direction essentially parallel to the direction of movement 115 of the first antenna entity or functionality 111'. Especially in case that the directions of movement (or the paths of movement) of the satellites of the first and second antenna entities or functionalities 111', 112' are not too much intersecting (i.e. are substantially parallel to each other or to the direction of movement 115 of the first antenna entity or functionality 111'), the following configuration (attempted to be illustrated in Figure 1) might exemplarily be realized: The first antenna entity or functionality 111' moves along its path of movement, and moves (or is located) during a first time interval over the first further quasi-earth-fixed radio cell 10 (and there provides radio coverage), then (and during a second time interval) over the quasi-earth-fixed radio cell 11 (and there provides radio coverage) and then (and during a third time interval) over the second further quasi-earth-fixed radio cell 12 (and there provides radio coverage). The second antenna entity or functionality 112' comes after (or follows) the first antenna entity or functionality 111' and likewise moves along its path of movement; during the first time interval, the second antenna entity or functionality 112' has not yet reached the first further quasi-earth-fixed radio cell 10, but it moves (or is located) during the second time interval over the first further quasi-earth-fixed radio cell 10 (and there provides radio coverage), then (and during the third time interval) over the quasi-earth-fixed radio cell 11 (and there provides radio coverage) and then (and during a fourth time interval) over the second further quasi-earth-fixed radio cell 12 (and there provides radio coverage).
Hence, each one of the antenna entities or functionalities 111', 112' provides radio coverage, in this sequence, to the first further quasi-earth-fixed radio cell 10, to the quasi-earth-fixed radio cell 11, and to the second further quasi-earth-fixed radio cell 12, and this radio coverage is provided, respectively, during a certain period of time (or service time interval) regarding each radio cell 10, 11, 12; and as the first antenna entity or functionality 111' comes first (with regard to, or compared to, the second antenna entity or functionality 112', along their respective paths of movement), the respective service time intervals of the first antenna entity or functionality 111' (regarding each radio cell 10, 11, 12) precede the respective service time intervals of the second antenna entity or functionality 112' (likewise regarding each radio cell 10, 11, 12). At the end of each one of such service time intervals, the respective antenna entity or functionality 111', 112' is controlled such as to switch (or caused to switch) the respective radio coverage area, i.e. - according to the exemplary representation shown in Figure 1 - from the first further quasi-earth-fixed radio cell 10 to the quasi-earth-fixed radio cell 11, or from the quasi-earth-fixed radio cell 11 to the second further quasi-earth-fixed radio cell 12.
According to the present invention, such switching is made possible by means of the first and second antenna entities or functionalities 111', 112' corresponding to antenna entities or functionalities with the possibility to generate shapeable and/or steerable (radiofrequency communication) beams.

This switching is schematically shown in Figure 2, which schematically illustrates the situation of the user equipment 20 being served by the base station entity 111 (or by the plurality of base station entities 111, 112), wherein radio coverage is provided (sequentially) by the first and second antenna entities or functionalities 111', 112'. Again, Figure 2 shows the case (or possibility) that the first and second antenna entities or functionalities 111', 112' are located on different satellites or high-altitude platforms, and again, Figure 2, shows, in addition to the quasi-earth-fixed radio cell 11, the first further quasi-earth-fixed radio cell 10 and the second further quasi-earth-fixed radio cell 12. These radio cells 10, 11, 12 are roughly located one behind the other, the first and second antenna entities or functionalities 111', 112' moving - along their respective direction of movement, indicated by means of reference sign 115 for the first antenna entity or functionality 111', and indicated by means of reference sign 116 for the second antenna entity or functionality 112' - respectively above these radio cells 10, 11, 12. It is assumed, according to the present invention, that - at least in view of a considered time interval - the second antenna entity or functionality 112' follows the first antenna entity or functionality 111'; this is exemplarily shown in Figure 2 for the first and second antenna functionality or services 111', 112'; in case that the directions of movement 115, 116 (or the paths of movement) of the satellites of the first and second antenna entities or functionalities 111', 112' are not too much intersecting (i.e. are substantially parallel to each other) such considered time intervals might occur subsequently, or even continuously; if this assumption (of substantially parallel paths of movement, and therefore many such considered time intervals succeeding each other) is not verified, there might be another pair of satellites - especially in a satellite constellation comprising many dozens or even hundreds of satellites - covering the respective radio cells 10, 11, 12 in an analogous manner which regard to a time interval after such a considered time interval. In Figure 2, the movement of the first and second antenna entities or functionalities 111', 112' is schematically illustrated by means of two arrows, together with positional indications 1, 2, 3 relating to the first antenna entity or functionality 111', and positional indications 1', 2', 3' relating to the second antenna entity or functionality 112'; regarding these positions, the first and second antenna entities or functionalities 111', 112' move in an analogous manner, i.e. the first antenna entity or functionality 111' is at position 1 when the second antenna entity or functionality 112' is at position 1', and so forth. One additional positional indication 0 is represented in Figure 2 relating to the position of the first antenna entity or functionality 111' at a previous point in time, and another additional positional indication 4' is represented in Figure 2 relating to the position of the second antenna entity or functionality 112' at a later point in time.
At the specific point in time 1, radio coverage is provided to the quasi-earth-fixed radio cell 11 via (or using) the first antenna entity or functionality 111', and at the specific further point in time 3', radio coverage is provided to the quasi-earth-fixed radio cell 11 via (or using) the second antenna entity or functionality 112'. With the positional indications 0 to 3 for the first antenna entity or functionality 111' and 1' to 4' for the second antenna entity or functionality 112', the following typically occurs:
The first antenna entity or functionality 111' is located - at 0, prior to the above mentioned specific point in time 1 - above the first further quasi-earth-fixed radio cell 10, and then provides radio coverage to the first further quasi-earth-fixed radio cell 10 (during a certain time interval). Subsequently, the first antenna entity or functionality 111' is located at 1 above the quasi-earth-fixed radio cell 11 and provides it with radio coverage (at least) at the above mentioned specific point in time. Then, the first antenna entity or functionality 111' is located at 3 above the second further quasi-earth-fixed radio cell 12 and provides it with radio coverage (at least) at the above mentioned further specific point in time. The second antenna entity or functionality 112' is located - at 1', i.e. when the first antenna entity or functionality 111', at 1, serves the quasi-earth-fixed radio cell 11 - above the first further quasi-earth-fixed radio cell 10 and provides it with radio coverage during a certain time interval. The, the second antenna entity or functionality 112' is located at 3' above the quasi-earth-fixed radio cell 11 and provides it with radio coverage (at least) at the above mentioned further specific point in time. Then, the second antenna entity or functionality 112' is located at 4' above the second further quasi-earth-fixed radio cell 12 and provides it with radio coverage.
At positional indication 2, the first antenna entity or functionality 111' switches from previously providing radio coverage to the quasi-earth-fixed radio cell 11 (indicated by a drawn-through trapezoid in Figure 2, directing from the first antenna entity or functionality 111' towards the user equipment 20) towards subsequently providing radio coverage to the second further quasi-earth-fixed radio cell 12 (indicated by a dashed trapezoid in Figure 2, the switch being represented by means of a bent and drawn-through arrow between these two trapezoids). Likewise, at positional indication 2', the second antenna entity or functionality 112' switches from previously providing radio coverage to the first further quasi-earth-fixed radio cell 10 (indicated by a dot-dashed trapezoid in Figure 2) towards subsequently providing radio coverage to the quasi-earth-fixed radio cell 11 (indicated by a drawn-through trapezoid in Figure 2, directing from the second antenna entity or functionality 112' towards the user equipment 20, the switch being represented by means of a bent and dashed arrow between these two trapezoids).

According to the present invention, the first and second antenna entities or functionalities 111', 112' are more or less constantly transmitting (of course at discrete points in time) radio cell identifier information (of varying values or content). Furthermore according to the present invention, the first and second antenna entities or functionalities 111', 112' are controlled such that, at the time of this switch (at positions 2, 2') - i.e. during or while performing the switching from the previous coverage area to the subsequent coverage area (for the first antenna entity or functionality 111' from radio cells 11 to 12, and for the second antenna entity or functionality 112' from radio cells 10 to 11) -, also the radio cell identifier information is changed; however, according to the present invention, this change of the respectively transmitted radio cell identifier information occurs in a manner that the user equipment 20, being located in the quasi-earth-fixed radio cell 11, continuously experiences the same (value of the) radio cell identifier information (hereinafter also called the specific radio cell identifier information).
Hence, considering - as the common coverage time interval - the time interval from briefly prior to this switch occurrence (at positions 2, 2') until briefly subsequent to this switch occurrence (briefly having the meaning, here, that no change of radio coverage has occurred, i.e. prior to the switch, it is (still) the first antenna entity or functionality 111' providing coverage to the quasi-earth-fixed radio cell 11, and subsequent to the switch, it is (still) the second antenna entity or functionality 112' providing coverage to the quasi-earth-fixed radio cell 11), then:
-- the first antenna entity or functionality 111' covers the first part of the common coverage time interval (i.e. provides radio coverage) regarding the quasi-earth-fixed radio cell 11,
-- the second antenna entity or functionality 112' covers the subsequent second part of the common coverage time interval (i.e. provides radio coverage) regarding the quasi-earth-fixed radio cell 11, and
both during substantially the first part of the common coverage time interval and during substantially the second part of the common coverage time interval, the user equipment 20 receives the same (value or content of the) specific radio cell identifier information transmitted by the first and second antenna entities or functionalities 111', 112' (during their respective part of the common coverage time interval.

Figures 3 and 4 schematically illustrate the situation of the user equipment being served by the base station entity 111, wherein radio coverage is provided (sequentially) by the first and second antenna entities or functionalities, wherein both the first and second antenna entities or functionalities are located on the same satellite or high-altitude platform. In such a situation (i.e. if both the first and second antenna entities or functionalities are located onboard the same satellite or high-altitude platform), the first antenna entity or functionality is designated by means of reference sign 1111', and the second antenna entity or functionality is designated by means of reference sign 1112'.
Figure 3 shows a situation being almost analogous to the situation illustrated in Figure 2 with the only difference of the first and second antenna entities or functionalities 1111', 1112' not being able to move independently (as they are located onboard the same satellite). However, the above-mentioned switching occurs in an analogous manner, and is, in Figure 3, also represented by means of two drawn-through trapezoids, a dashed trapezoid, and a dot-dashed trapezoid (with bent arrows between two pairs thereof). Furthermore analogously, the radio cells 10, 11, 12 as well as the user equipment 20 is/are schematically indicated.

Both in Figures 2 and 3, it is assumed that one radio cell (of the considered radio cells 10, 11, 12) is served (or provided with radio coverage) using either the first antenna entity or functionality 111'/1111' or the second antenna entity or functionality 112'/1112' completely, i.e. substantially 100% thereof, and these antenna entities or functionalities, respectively, typically provide all the radio coverage regarding a considered radio cell, and such radio coverage is only switchable "all or nothing", i.e. at 100%. This also means that the above-mentioned switching (at positions 2, 2', cf. Figure 2, or around the time of the transition between the first and second part of the common coverage time interval) necessarily needs to occur rather synchronously (in case that no radio cell shall lose its radio coverage during extended periods of time).
As such a rather simplistic "all or nothing" coverage and switching behavior has benefits for explaining the underlaying idea of the present invention (i.e. that a static satellite network situation (or radio coverage) is able to be created - despite using non-geo-stationary satellites, i.e. while low earth orbit satellites with typically multiple spot beams are still flying in and out with respect to a considered user equipment on the earth surface or with respect to a considered radio cell - at least regarding the values (or the content) of radio cell identifier information transmitted (by the various satellites) towards that considered user equipment or that considered radio cell), further variants or improvements such as the one shown in Figure 4 are able to be implemented according to the present invention.

Figure 4 shows an exemplary embodiment of the first antenna entity or functionality 1111', wherein the first antenna entity or functionality 1111' comprises a first radio coverage beam (or sub-beam) A and a second radio coverage beam (or sub-beam) B. The second antenna entity or functionality 1112' is schematically shown having a further radio coverage beam (or sub-beam) C. At a given point in time around the above-mentioned switching (at positions 2, 2', cf. Figure 2, i.e. in the time proximity of the transition between the first and second part of the common coverage time interval), radio cell 11 might be provided with radio coverage (still) from both radio coverage beams A and B of the first antenna entity or functionality 1111', while, additionally be provided with radio coverage (already) from the further radio coverage beam C of the second antenna entity or functionality 1112' (this situation is schematically indicated, in Figure 4, by means of drawn-through trapezoids, i.e. the further radio coverage beam C has already been switched (from the dot-dot-dashed trapezoid), and either at the same moment or slightly later (or slightly earlier) the first radio coverage beam A is switched (towards the dashed trapezoid). It is thereby advantageously possible to provide for a more robust switching behavior and also to provide for an overall better radio coverage, e.g. by means of using one of the radio coverage beams of the satellite as a helper beam (or switch transition beam) that is not necessarily used for continuously providing radio coverage to a specific radio cell but to help in switching other beams.
Hence, according to the present invention, further variants are possible, such as the usage of the switch transition beams, where temporary usage of additional beam(s) allows a smooth switch from the initial serving beam to the new serving beam while during the phase of transition this "switch transition beam(s)" help(s) to keep the coverage situation on the single cell (with the same PCI) stable and avoid coverage fluctuations.

With an approach according to the present invention, any mobility resulting from the drifting satellite is advantageously able to be eliminated. The effort is obviously now on the satellite side to prepare and activate the beams accordingly while keeping a consistent PCI configuration (or radio cell identifier information configuration) on the ground. Satellite internal routing of data targeting a particular cell (PCI) now needs to update the serving beams configuration.

## Claims

1. Method for using a user equipment (20) in a mobile communication network (100) comprising a non-terrestrial network in view of providing radio coverage to the user equipment (20), wherein the user equipment (20) is served by a satellite-based base station entity (111), the satellite-based base station entity (111) being part of that non-terrestrial network, wherein a first antenna entity (1111', 111') and a second antenna entity (1112', 112') are likewise part of that non-terrestrial network and are part of the satellite-based base station entity (111),
wherein both the first and second antenna entities (1111', 111', 1112', 112') are satellite-based antenna entities , wherein the first and second antenna entities (1111', 111', 1112', 112') sequentially provide radio coverage to different quasi-earth-fixed radio cells (10, 11, 12), wherein changing to provide radio coverage from one quasi-earth-fixed radio cell (10, 11, 12) to another quasi-earth-fixed radio cell (10, 11, 12) is realized by means of switching a radio coverage beam, wherein the first and second antenna entities (1111', 111', 1112', 112') transmit a radio cell identifier information and changing to provide radio coverage from one quasi-earth-fixed radio cell (10, 11, 12) to another quasi-earth-fixed radio cell (10, 11, 12) involves changing the transmitted radio cell identifier information,
wherein the first and second antenna entities (1111', 111', 1112', 112') move relative to the earth surface, thereby being able to provide - together and during a common coverage time interval - radio coverage to a specific considered geographical area that corresponds to a quasi-earth-fixed radio cell (11), the first antenna entity (1111', 111') covering a first part of the common coverage time interval regarding the quasi-earth-fixed radio cell (11) and the second antenna entity (1112', 112') covering a subsequent second part of the common coverage time interval regarding the quasi-earth-fixed radio cell (11), wherein the first and second antenna entities (1111', 111', 1112', 112'), respectively, provide for radio coverage - the first antenna entity (1111', 111') during the first part of the common coverage time interval and the second antenna entity (1112', 112') during the second part of the common coverage time interval - of the specific geographical area that corresponds to the quasi-earth-fixed radio cell (11) by means of using, respectively, at least one radio coverage beam, wherein the provision of a quasi-earth-fixed radio coverage, to the quasi-earth-fixed radio cell (11), is realized by means of modifying the direction of the at least one radio coverage beam, wherein, in order for the user equipment (20) to be provided with radio coverage while being located within the quasi-earth-fixed radio cell (11), the method comprises the following steps:
-- in a first step and during the first part of the common coverage time interval, transmitting, by the first antenna entity (1111', 111'), a specific radio cell identifier information that is received by the user equipment (20), and
-- in a second step and during the second part of the common coverage time interval, transmitting, by the second antenna entity (1112', 112'), the same specific radio cell identifier information that is received by the user equipment(20).

2. Mobile communication network (100) comprising a non-terrestrial network in view of providing radio coverage to a user equipment (20), wherein the user equipment (20), being connected to the mobile communication network (100), is served by a satellite-based base station entity (111), the satellite-based base station entity (111) being part of that non-terrestrial network, wherein a first antenna entity (1111', 111') and a second antenna entity (1112', 112') are likewise part of that non-terrestrial network and are part of the satellite-based base station entity (111),
wherein both the first and second antenna entities (1111', 111', 1112', 112') are satellite-based antenna entities, wherein the first and second antenna entities (1111', 111', 1112', 112') are configured to sequentially provide radio coverage to different quasi-earth-fixed radio cells (10, 11, 12) and are further configured such that changing to provide radio coverage from one quasi-earth-fixed radio cell (10, 11, 12) to another quasi-earth-fixed radio cell (10, 11, 12) is realized by means of switching a radio coverage beam, wherein the first and second antenna entities (1111', 111', 1112', 112') are configured to transmit a radio cell identifier information and are further configured such that changing to provide radio coverage from one quasi-earth-fixed radio cell (10, 11, 12) to another quasi-earth-fixed radio cell (10, 11, 12) involves changing the transmitted radio cell identifier information,
wherein the first and second antenna entities (1111', 111', 1112', 112') move relative to the earth surface, thereby being able to provide - together and during a common coverage time interval - radio coverage to a specific considered geographical area that corresponds to a quasi-earth-fixed radio cell (11), the first antenna entity (1111', 111') covering a first part of the common coverage time interval regarding the quasi-earth-fixed radio cell (11) and the second antenna entity (1112', 112') covering a subsequent second part of the common coverage time interval regarding the quasi-earth-fixed radio cell (11), wherein the first and second antenna entities (1111', 111', 1112', 112'), respectively, provide for radio coverage - the first antenna entity (1111', 111') during the first part of the common coverage time interval and the second antenna entity (1112', 112') during the second part of the common coverage time interval - of the specific geographical area that corresponds to the quasi-earth-fixed radio cell (11) by means of using, respectively, at least one radio coverage beam, wherein the provision of a quasi-earth-fixed radio coverage, to the quasi-earth-fixed radio cell (11), is realized by means of modifying the direction of the at least one radio coverage beam, wherein, in order for the user equipment (20) to be provided with radio coverage while being located within the quasi-earth-fixed radio cell (11), the mobile communication network (100) is configured such that:
-- during the first part of the common coverage time interval, the user equipment (20) receives a specific radio cell identifier information transmitted by the first antenna entity (1111', 111'), and
-- during the second part of the common coverage time interval, the user equipment (20) receives the same specific radio cell identifier information transmitted by the second antenna entity (1112', 112').

3. System of an antenna entity (1111', 111') and a second antenna entity (1112', 112'), the antenna entity (1111', 111') and the second antenna entity (1112', 112') being part of a satellite-based base station entity (111) and the antenna entity (1111', 111') being configured to interact with at least the second antenna entity (1112', 112'), in order to use a user equipment (20) in a mobile communication network (100) comprising a non-terrestrial network comprising the antenna entity (1111', 111') and the second antenna entity (1112', 112') in view of providing radio coverage to the user equipment (20), wherein the user equipment (20) is served by the satellite-based base station entity (111), the satellite-based base station entity (111) being part of that non-terrestrial network, wherein both the antenna entity (1111', 111') and the second antenna entity (1112', 112') are satellite-based antenna entities,
wherein the antenna entity (1111', 111') is configured such as to provide, with the second antenna entity (1112', 112') to move relative to the earth surface, - together and during a common coverage time interval - radio coverage to a specific considered geographical area that corresponds to a quasi-earth-fixed radio cell (11), the antenna entity (1111', 111') covering a first part of the common coverage time interval regarding the quasi-earth-fixed radio cell (11) and the second antenna entity (1112', 112') covering a subsequent second part of the common coverage time interval regarding the quasi-earth-fixed radio cell (11),
wherein the antenna entity (1111', 111') and the second antenna entity (1112', 112') transmit a radio cell identifier information, wherein the antenna entity (1111', 111') and the second antenna entity (1112', 112') are configured to sequentially provide radio coverage to different quasi-earth-fixed radio cells (10, 11, 12) and are further configured such that changing to provide radio coverage from one quasi-earth-fixed radio cell (10, 11, 12) to another quasi-earth-fixed radio cell (10, 11, 12) is realized by means of switching a radio coverage beam, wherein the antenna entity (1111', 111') and the second antenna entity (1112', 112') are configured to transmit a radio cell identifier information and are further configured such that changing to provide radio coverage from one quasi-earth-fixed radio cell (10, 11, 12) to another quasi-earth-fixed radio cell (10, 11, 12) involves changing the transmitted radio cell identifier information, wherein the provision of a quasi-earth-fixed radio coverage, to the quasi-earth-fixed radio cell (11), is realized by means of modifying the direction of at least a radio coverage beam,
wherein, in order for the user equipment (20) to be provided with radio coverage while being located within the quasi-earth-fixed radio cell (11), the antenna entity (1111', 111') being configured such as to interact with at least the second antenna entity (1112', 112') such that:
-- during the first part of the common coverage time interval, the antenna entity (1111', 111') transmits a specific radio cell identifier information that is received by user equipment (20), and
-- during the second part of the common coverage time interval, the second antenna entity (1112', 112') transmits the same specific radio cell identifier information that is received by the user equipment (20).

4. Program comprising a computer readable program code, which, when executed in part on a user equipment (20) and in part on first and second antenna entities (1111', 111', 1112', 112'), causes user equipment (20) and the first and second antenna entities (1111', 111', 1112', 112') to perform a method according to claim 1.

5. Computer-readable medium comprising instructions which when executed in part on a user equipment (20) and in part on first and second antenna entities (1111', 111', 1112', 112'), causes the user equipment (20) and the first and second antenna entities (1111', 111', 1112', 112') to perform a method according to claim 1.

## Patentansprüche

1. Verfahren zur Verwendung eines Benutzergeräts (20) in einem Mobilkommunikationsnetz (100), das ein nicht-terrestrisches Netz umfasst, um dem Benutzergerät (20) Funknetzabdeckung bereitzustellen, wobei das Benutzergerät (20) von einer satellitengestützten Basisstationseinheit (111) bedient wird, wobei die satellitengestützte Basisstationseinheit (111) Teil dieses nicht-terrestrischen Netzes ist, wobei eine erste Antenneneinheit (1111', 111') und eine zweite Antenneneinheit (1112', 112') ebenfalls Teil dieses nicht-terrestrischen Netzes und Teil der satellitengestützten Basisstationseinheit (111) sind,
wobei sowohl die erste als auch die zweite Antenneneinheit (1111', 111', 1112', 112') satellitengestützte Antenneneinheiten sind, wobei die erste und die zweite Antenneneinheit (1111', 111', 1112', 112') sequenziell verschiedenen quasi-erdfesten Funkzellen (10, 11, 12) Funknetzabdeckung bereitstellen, wobei der Wechsel der Funknetzabdeckung von einer quasi-erdfesten Funkzelle (10, 11, 12) zu einer anderen quasi-erdfesten Funkzelle (10, 11, 12) durch Umschalten eines Funkversorgungsstrahls realisiert wird, wobei die erste und die zweite Antenneneinheit (1111', 111', 1112', 112') eine Funkzellen-Identifikationsinformation übertragen und der Wechsel der Funknetzabdeckung von einer quasi-erdfesten Funkzelle (10, 11, 12) zu einer anderen quasi-erdfesten Funkzelle (10, 11, 12) eine Änderung der übertragenen Funkzellen-Identifikationsinformation beinhaltet,
wobei sich die erste und die zweite Antenneneinheit (1111', 111', 1112', 112') relativ zur Erdoberfläche bewegen und dadurch in der Lage sind, - gemeinsam und während eines gemeinsamen Versorgungszeitintervalls - einem bestimmten betrachteten geografischen Gebiet, das einer quasi-erdfesten Funkzelle (11) entspricht, Funknetzabdeckung bereitzustellen, wobei die erste Antenneneinheit (1111', 111') einen ersten Teil des gemeinsamen Versorgungszeitintervalls bezüglich der quasi-erdfesten Funkzelle (11) abdeckt und die zweite Antenneneinheit (1112', 112') einen nachfolgenden zweiten Teil des gemeinsamen Versorgungszeitintervalls bezüglich der quasi-erdfesten Funkzelle (11) abdeckt, wobei die erste und die zweite Antenneneinheit (1111', 111', 1112', 112') jeweils Funknetzabdeckung - die erste Antenneneinheit (1111', 111') während des ersten Teils des gemeinsamen Versorgungszeitintervalls und die zweite Antenneneinheit (1112', 112') während des zweiten Teils des gemeinsamen Versorgungszeitintervalls - für das bestimmte geografische Gebiet, das der quasi-erdfesten Funkzelle (11) entspricht, mittels jeweils mindestens eines Funkversorgungsstrahls bereitstellen, wobei die Bereitstellung einer quasi-erdfesten Funknetzabdeckung für die quasi-erdfeste Funkzelle (11) durch Modifikation der Richtung des mindestens einen Funkversorgungsstrahls realisiert wird, wobei das Verfahren, damit dem Benutzergerät (20) Funknetzabdeckung bereitgestellt werden kann, während es sich innerhalb der quasi-erdfesten Funkzelle (11) befindet, die folgenden Schritte umfasst:
- in einem ersten Schritt und während des ersten Teils des gemeinsamen Versorgungszeitintervalls: Übertragen, durch die erste Antenneneinheit (1111', 111'), einer bestimmten Funkzellen-Identifikationsinformation, die von dem Benutzergerät (20) empfangen wird, und
- in einem zweiten Schritt und während des zweiten Teils des gemeinsamen Versorgungszeitintervalls: Übertragen, durch die zweite Antenneneinheit (1112', 112'), derselben bestimmten Funkzellen-Identifikationsinformation, die von dem Benutzergerät (20) empfangen wird.

2. Mobilkommunikationsnetz (100), das ein nicht-terrestrisches Netz umfasst, um einem Benutzergerät (20) Funknetzabdeckung bereitzustellen, wobei das Benutzergerät (20), das mit dem Mobilkommunikationsnetz (100) verbunden ist, von einer satellitengestützten Basisstationseinheit (111) bedient wird, wobei die satellitengestützte Basisstationseinheit (111) Teil dieses nicht-terrestrischen Netzes ist, wobei eine erste Antenneneinheit (1111', 111') und eine zweite Antenneneinheit (1112', 112') ebenfalls Teil dieses nicht-terrestrischen Netzes und Teil der satellitengestützten Basisstationseinheit (111) sind,
wobei sowohl die erste als auch die zweite Antenneneinheit (1111', 111', 1112', 112') satellitengestützte Antenneneinheiten sind, wobei die erste und die zweite Antenneneinheit (1111', 111', 1112', 112') dazu konfiguriert sind, verschiedenen quasi-erdfesten Funkzellen (10, 11, 12) sequenziell Funknetzabdeckung bereitzustellen, und ferner derart konfiguriert sind, dass der Wechsel der Funknetzabdeckung von einer quasi-erdfesten Funkzelle (10, 11, 12) zu einer anderen quasi-erdfesten Funkzelle (10, 11, 12) durch Umschalten eines Funkversorgungsstrahls realisiert wird, wobei die erste und die zweite Antenneneinheit (1111', 111', 1112', 112') dazu konfiguriert sind, eine Funkzellen-Identifikationsinformation zu übertragen, und ferner derart konfiguriert sind, dass der Wechsel der Funknetzabdeckung von einer quasi-erdfesten Funkzelle (10, 11, 12) zu einer anderen quasi-erdfesten Funkzelle (10, 11, 12) eine Änderung der übertragenen Funkzellen-Identifikationsinformation beinhaltet,
wobei sich die erste und die zweite Antenneneinheit (1111', 111', 1112', 112') relativ zur Erdoberfläche bewegen und dadurch in der Lage sind, - gemeinsam und während eines gemeinsamen Versorgungszeitintervalls - einem bestimmten betrachteten geografischen Gebiet, das einer quasi-erdfesten Funkzelle (11) entspricht, Funknetzabdeckung bereitzustellen, wobei die erste Antenneneinheit (1111', 111') einen ersten Teil des gemeinsamen Versorgungszeitintervalls bezüglich der quasi-erdfesten Funkzelle (11) abdeckt und die zweite Antenneneinheit (1112', 112') einen nachfolgenden zweiten Teil des gemeinsamen Versorgungszeitintervalls bezüglich der quasi-erdfesten Funkzelle (11) abdeckt, wobei die erste und die zweite Antenneneinheit (1111', 111', 1112', 112') jeweils Funknetzabdeckung - die erste Antenneneinheit (1111', 111') während des ersten Teils des gemeinsamen Versorgungszeitintervalls und die zweite Antenneneinheit (1112', 112') während des zweiten Teils des gemeinsamen Versorgungszeitintervalls - für das bestimmte geografische Gebiet, das der quasi-erdfesten Funkzelle (11) entspricht, mittels jeweils mindestens eines Funkversorgungsstrahls bereitstellen, wobei die Bereitstellung einer quasi-erdfesten Funknetzabdeckung für die quasi-erdfeste Funkzelle (11) durch Modifikation der Richtung des mindestens einen Funkversorgungsstrahls realisiert wird, wobei das Mobilkommunikationsnetz (100), damit dem Benutzergerät (20) Funknetzabdeckung bereitgestellt werden kann, während es sich innerhalb der quasi-erdfesten Funkzelle (11) befindet, derart konfiguriert ist, dass:
- während des ersten Teils des gemeinsamen Versorgungszeitintervalls das Benutzergerät (20) eine bestimmte Funkzellen-Identifikationsinformation empfängt, die von der ersten Antenneneinheit (1111', 111') übertragen wird, und
- während des zweiten Teils des gemeinsamen Versorgungszeitintervalls das Benutzergerät (20) dieselbe bestimmte Funkzellen-Identifikationsinformation empfängt, die von der zweiten Antenneneinheit (1112', 112') übertragen wird.

3. System aus einer Antenneneinheit (1111', 111') und einer zweiten Antenneneinheit (1112', 112'), wobei die Antenneneinheit (1111', 111') und die zweite Antenneneinheit (1112', 112') Teil einer satellitengestützten Basisstationseinheit (111) sind und die Antenneneinheit (1111', 111') dazu konfiguriert ist, mit mindestens der zweiten Antenneneinheit (1112', 112') zusammenzuwirken, um ein Benutzergerät (20) in einem Mobilkommunikationsnetz (100) zu verwenden, das ein nicht-terrestrisches Netz umfasst, welches die Antenneneinheit (1111', 111') und die zweite Antenneneinheit (1112', 112') umfasst, um dem Benutzergerät (20) Funknetzabdeckung bereitzustellen, wobei das Benutzergerät (20) von der satellitengestützten Basisstationseinheit (111) bedient wird, wobei die satellitengestützte Basisstationseinheit (111) Teil dieses nicht-terrestrischen Netzes ist, wobei sowohl die Antenneneinheit (1111', 111') als auch die zweite Antenneneinheit (1112', 112') satellitengestützte Antenneneinheiten sind,
wobei die Antenneneinheit (1111', 111') derart konfiguriert ist, dass sie gemeinsam mit der zweiten Antenneneinheit (1112', 112'), die sich relativ zur Erdoberfläche bewegt, - gemeinsam und während eines gemeinsamen Versorgungszeitintervalls - einem bestimmten betrachteten geografischen Gebiet, das einer quasi-erdfesten Funkzelle (11) entspricht, Funknetzabdeckung bereitstellt, wobei die Antenneneinheit (1111', 111') einen ersten Teil des gemeinsamen Versorgungszeitintervalls bezüglich der quasi-erdfesten Funkzelle (11) abdeckt und die zweite Antenneneinheit (1112', 112') einen nachfolgenden zweiten Teil des gemeinsamen Versorgungszeitintervalls bezüglich der quasi-erdfesten Funkzelle (11) abdeckt,
wobei die Antenneneinheit (1111', 111') und die zweite Antenneneinheit (1112', 112') eine Funkzellen-Identifikationsinformation übertragen, wobei die Antenneneinheit (1111', 111') und die zweite Antenneneinheit (1112', 112') dazu konfiguriert sind, verschiedenen quasi-erdfesten Funkzellen (10, 11, 12) sequenziell Funknetzabdeckung bereitzustellen, und ferner derart konfiguriert sind, dass der Wechsel der Funknetzabdeckung von einer quasi-erdfesten Funkzelle (10, 11, 12) zu einer anderen quasi-erdfesten Funkzelle (10, 11, 12) durch Umschalten eines Funkversorgungsstrahls realisiert wird, wobei die Antenneneinheit (1111', 111') und die zweite Antenneneinheit (1112', 112') dazu konfiguriert sind, eine Funkzellen-Identifikationsinformation zu übertragen, und ferner derart konfiguriert sind, dass der Wechsel der Funknetzabdeckung von einer quasi-erdfesten Funkzelle (10, 11, 12) zu einer anderen quasi-erdfesten Funkzelle (10, 11, 12) eine Änderung der übertragenen Funkzellen-Identifikationsinformation beinhaltet, wobei die Bereitstellung einer quasi-erdfesten Funknetzabdeckung für die quasi-erdfeste Funkzelle (11) durch Modifikation der Richtung mindestens eines Funkversorgungsstrahls realisiert wird,
wobei die Antenneneinheit (1111', 111'), damit dem Benutzergerät (20) Funknetzabdeckung bereitgestellt werden kann, während es sich innerhalb der quasi-erdfesten Funkzelle (11) befindet, derart konfiguriert ist, mit mindestens der zweiten Antenneneinheit (1112', 112') zusammenzuwirken, sodass:
- während des ersten Teils des gemeinsamen Versorgungszeitintervalls die Antenneneinheit (1111', 111') eine bestimmte Funkzellen-Identifikationsinformation überträgt, die von dem Benutzergerät (20) empfangen wird, und
- während des zweiten Teils des gemeinsamen Versorgungszeitintervalls die zweite Antenneneinheit (1112', 112') dieselbe bestimmte Funkzellen-Identifikationsinformation überträgt, die von dem Benutzergerät (20) empfangen wird.

4. Programm, das einen computerlesbaren Programmcode umfasst, der, wenn er teilweise auf einem Benutzergerät (20) und teilweise auf einer ersten und einer zweiten Antenneneinheit (1111', 111', 1112', 112') ausgeführt wird, das Benutzergerät (20) und die erste und die zweite Antenneneinheit (1111', 111', 1112', 112') veranlasst, ein Verfahren gemäß Anspruch 1 durchzuführen.

5. Computerlesbares Medium, das Anweisungen umfasst, die, wenn sie teilweise auf einem Benutzergerät (20) und teilweise auf einer ersten und einer zweiten Antenneneinheit (1111', 111', 1112', 112') ausgeführt werden, das Benutzergerät (20) und die erste und die zweite Antenneneinheit (1111', 111', 1112', 112') veranlassen, ein Verfahren gemäß Anspruch 1 durchzuführen.

## Revendications

1. Procédé d'utilisation d'un équipement utilisateur (20) dans un réseau de communication mobile (100) comprenant un réseau non terrestre en vue de fournir une couverture radio à l'équipement utilisateur (20), ledit équipement utilisateur (20) étant desservi par une entité de station de base par satellite (111), ladite entité de station de base par satellite (111) faisant partie dudit réseau non terrestre, une première entité d'antenne (1111', 111') et une deuxième entité d'antenne (1112', 112') faisant également partie dudit réseau non terrestre et de ladite entité de station de base par satellite (111),
lesdites première et deuxième entités d'antenne (1111', 111', 1112', 112') étant toutes deux des entités d'antenne par satellite, lesdites première et deuxième entités d'antenne (1111', 111', 1112', 112') fournissant séquentiellement une couverture radio à différentes cellules radio quasi-fixes par rapport à la Terre (10, 11, 12), le passage de la couverture radio d'une cellule radio quasi-fixe par rapport à la Terre (10, 11, 12) à une autre cellule radio quasi-fixe par rapport à la Terre (10, 11, 12) étant réalisé au moyen de la commutation d'un faisceau de couverture radio, lesdites première et deuxième entités d'antenne (1111', 111', 1112', 112') transmettant une information d'identification de cellule radio et le passage de la couverture radio d'une cellule radio quasi-fixe par rapport à la Terre (10, 11, 12) à une autre cellule radio quasi-fixe par rapport à la Terre (10, 11, 12) impliquant la modification de l'information d'identification de cellule radio transmise,
lesdites première et deuxième entités d'antenne (1111', 111', 1112', 112') se déplaçant par rapport à la surface terrestre, étant ainsi en mesure de fournir - conjointement et durant un intervalle de temps de couverture commun - une couverture radio à une zone géographique spécifique considérée, correspondant à une cellule radio quasi-fixe par rapport à la Terre (11), la première entité d'antenne (1111', 111') couvrant une première partie de l'intervalle de temps de couverture commun concernant la cellule radio quasi-fixe par rapport à la Terre (11) et la deuxième entité d'antenne (1112', 112') couvrant une deuxième partie ultérieure de l'intervalle de temps de couverture commun concernant la cellule radio quasi-fixe par rapport à la Terre (11), lesdites première et deuxième entités d'antenne (1111', 111', 1112', 112') fournissant respectivement une couverture radio - la première entité d'antenne (1111', 111') durant la première partie de l'intervalle de temps de couverture commun et la deuxième entité d'antenne (1112', 112') durant la deuxième partie de l'intervalle de temps de couverture commun - de la zone géographique spécifique correspondant à la cellule radio quasi-fixe par rapport à la Terre (11) au moyen de l'utilisation respectivement d'au moins un faisceau de couverture radio, la fourniture d'une couverture radio quasi-fixe par rapport à la Terre à la cellule radio quasi-fixe par rapport à la Terre (11) étant réalisée au moyen de la modification de la direction dudit au moins un faisceau de couverture radio, le procédé, afin que l'équipement utilisateur (20) bénéficie d'une couverture radio lorsqu'il se trouve à l'intérieur de la cellule radio quasi-fixe par rapport à la Terre (11), comprenant les étapes suivantes :
- dans une première étape et durant la première partie de l'intervalle de temps de couverture commun, la première entité d'antenne (1111', 111') transmet une information d'identification de cellule radio spécifique qui est reçue par l'équipement utilisateur (20), et
- dans une deuxième étape et durant la deuxième partie de l'intervalle de temps de couverture commun, la deuxième entité d'antenne (1112', 112') transmet la même information d'identification de cellule radio spécifique qui est reçue par l'équipement utilisateur (20).

2. Réseau de communication mobile (100) comprenant un réseau non terrestre en vue de fournir une couverture radio à un équipement utilisateur (20), ledit équipement utilisateur (20), connecté au réseau de communication mobile (100), étant desservi par une entité de station de base par satellite (111), ladite entité de station de base par satellite (111) faisant partie dudit réseau non terrestre, une première entité d'antenne (1111', 111') et une deuxième entité d'antenne (1112', 112') faisant également partie dudit réseau non terrestre et de ladite entité de station de base par satellite (111),
lesdites première et deuxième entités d'antenne (1111', 111', 1112', 112') étant toutes deux des entités d'antenne par satellite, lesdites première et deuxième entités d'antenne (1111', 111', 1112', 112') étant configurées pour fournir séquentiellement une couverture radio à différentes cellules radio quasi-fixes par rapport à la Terre (10, 11, 12) et étant en outre configurées de telle sorte que le passage de la couverture radio d'une cellule radio quasi-fixe par rapport à la Terre (10, 11, 12) à une autre cellule radio quasi-fixe par rapport à la Terre (10, 11, 12) est réalisé au moyen de la commutation d'un faisceau de couverture radio, lesdites première et deuxième entités d'antenne (1111', 111', 1112', 112') étant configurées pour transmettre une information d'identification de cellule radio et étant en outre configurées de telle sorte que le passage de la couverture radio d'une cellule radio quasi-fixe par rapport à la Terre (10, 11, 12) à une autre cellule radio quasi-fixe par rapport à la Terre (10, 11, 12) implique la modification de l'information d'identification de cellule radio transmise,
lesdites première et deuxième entités d'antenne (1111', 111', 1112', 112') se déplaçant par rapport à la surface terrestre, étant ainsi en mesure de fournir - conjointement et durant un intervalle de temps de couverture commun - une couverture radio à une zone géographique spécifique considérée, correspondant à une cellule radio quasi-fixe par rapport à la Terre (11), la première entité d'antenne (1111', 111') couvrant une première partie de l'intervalle de temps de couverture commun concernant la cellule radio quasi-fixe par rapport à la Terre (11) et la deuxième entité d'antenne (1112', 112') couvrant une deuxième partie ultérieure de l'intervalle de temps de couverture commun concernant la cellule radio quasi-fixe par rapport à la Terre (11), lesdites première et deuxième entités d'antenne (1111', 111', 1112', 112') fournissant respectivement une couverture radio - la première entité d'antenne (1111', 111') durant la première partie de l'intervalle de temps de couverture commun et la deuxième entité d'antenne (1112', 112') durant la deuxième partie de l'intervalle de temps de couverture commun - de la zone géographique spécifique correspondant à la cellule radio quasi-fixe par rapport à la Terre (11) au moyen de l'utilisation respectivement d'au moins un faisceau de couverture radio, la fourniture d'une couverture radio quasi-fixe par rapport à la Terre à la cellule radio quasi-fixe par rapport à la Terre (11) étant réalisée au moyen de la modification de la direction dudit au moins un faisceau de couverture radio, ledit réseau de communication mobile (100), afin que l'équipement utilisateur (20) bénéficie d'une couverture radio lorsqu'il se trouve à l'intérieur de la cellule radio quasi-fixe par rapport à la Terre (11), étant configuré de telle sorte que :
- durant la première partie de l'intervalle de temps de couverture commun, l'équipement utilisateur (20) reçoit une information d'identification de cellule radio spécifique transmise par la première entité d'antenne (1111', 111'), et
- durant la deuxième partie de l'intervalle de temps de couverture commun, l'équipement utilisateur (20) reçoit la même information d'identification de cellule radio spécifique transmise par la deuxième entité d'antenne (1112', 112').

3. Système composé d'une entité d'antenne (1111', 111') et d'une deuxième entité d'antenne (1112', 112'), ladite entité d'antenne (1111', 111') et ladite deuxième entité d'antenne (1112', 112') faisant partie d'une entité de station de base par satellite (111) et ladite entité d'antenne (1111', 111') étant configurée pour interagir avec au moins ladite deuxième entité d'antenne (1112', 112'), afin d'utiliser un équipement utilisateur (20) dans un réseau de communication mobile (100) comprenant un réseau non terrestre comprenant ladite entité d'antenne (1111', 111') et ladite deuxième entité d'antenne (1112', 112') en vue de fournir une couverture radio à l'équipement utilisateur (20), ledit équipement utilisateur (20) étant desservi par ladite entité de station de base par satellite (111), ladite entité de station de base par satellite (111) faisant partie dudit réseau non terrestre, ladite entité d'antenne (1111', 111') et ladite deuxième entité d'antenne (1112', 112') étant toutes deux des entités d'antenne par satellite,
ladite entité d'antenne (1111', 111') étant configurée de manière à fournir, conjointement avec ladite deuxième entité d'antenne (1112', 112') se déplaçant par rapport à la surface terrestre, - conjointement et durant un intervalle de temps de couverture commun - une couverture radio à une zone géographique spécifique considérée, correspondant à une cellule radio quasi-fixe par rapport à la Terre (11), ladite entité d'antenne (1111', 111') couvrant une première partie de l'intervalle de temps de couverture commun concernant la cellule radio quasi-fixe par rapport à la Terre (11) et ladite deuxième entité d'antenne (1112', 112') couvrant une deuxième partie ultérieure de l'intervalle de temps de couverture commun concernant la cellule radio quasi-fixe par rapport à la Terre (11),
ladite entité d'antenne (1111', 111') et ladite deuxième entité d'antenne (1112', 112') transmettant une information d'identification de cellule radio, ladite entité d'antenne (1111', 111') et ladite deuxième entité d'antenne (1112', 112') étant configurées pour fournir séquentiellement une couverture radio à différentes cellules radio quasi-fixes par rapport à la Terre (10, 11, 12) et étant en outre configurées de telle sorte que le passage de la couverture radio d'une cellule radio quasi-fixe par rapport à la Terre (10, 11, 12) à une autre cellule radio quasi-fixe par rapport à la Terre (10, 11, 12) est réalisé au moyen de la commutation d'un faisceau de couverture radio, ladite entité d'antenne (1111', 111') et ladite deuxième entité d'antenne (1112', 112') étant configurées pour transmettre une information d'identification de cellule radio et étant en outre configurées de telle sorte que le passage de la couverture radio d'une cellule radio quasi-fixe par rapport à la Terre (10, 11, 12) à une autre cellule radio quasi-fixe par rapport à la Terre (10, 11, 12) implique la modification de l'information d'identification de cellule radio transmise, la fourniture d'une couverture radio quasi-fixe par rapport à la Terre à la cellule radio quasi-fixe par rapport à la Terre (11) étant réalisée au moyen de la modification de la direction d'au moins un faisceau de couverture radio,
ladite entité d'antenne (1111', 111'), afin que l'équipement utilisateur (20) bénéficie d'une couverture radio lorsqu'il se trouve à l'intérieur de la cellule radio quasi-fixe par rapport à la Terre (11), étant configurée de manière à interagir avec au moins ladite deuxième entité d'antenne (1112', 112') de telle sorte que :
- durant la première partie de l'intervalle de temps de couverture commun, ladite entité d'antenne (1111', 111') transmet une information d'identification de cellule radio spécifique qui est reçue par l'équipement utilisateur (20), et
- durant la deuxième partie de l'intervalle de temps de couverture commun, ladite deuxième entité d'antenne (1112', 112') transmet la même information d'identification de cellule radio spécifique qui est reçue par l'équipement utilisateur (20).

4. Programme comprenant un code de programme lisible par ordinateur, lequel, lorsqu'il est exécuté en partie sur un équipement utilisateur (20) et en partie sur une première et une deuxième entités d'antenne (1111', 111', 1112', 112'), amène l'équipement utilisateur (20) et les première et deuxième entités d'antenne (1111', 111', 1112', 112') à mettre en œuvre un procédé selon la revendication 1.

5. Support lisible par ordinateur comprenant des instructions qui, lorsqu'elles sont exécutées en partie sur un équipement utilisateur (20) et en partie sur une première et une deuxième entités d'antenne (1111', 111', 1112', 112'), amènent l'équipement utilisateur (20) et les première et deuxième entités d'antenne (1111', 111', 1112', 112') à mettre en œuvre un procédé selon la revendication 1.
